# EUROPÄISCHE PATENTSCHRIFT

(11) **EP 1 968 769 B1**
(45) Veröffentlichungstag und Bekanntmachung des Hinweises auf die Patenterteilung: **11.02.2009**
(21) Anmeldenummer: 06819484.4
(22) Anmeldetag: 15.11.2006
(51) Int. Cl.: B24B 55/10, B23Q 11/00

(54) **HANDWERKZEUGMASCHINENSTAUBBEHÄLTER**
DUST CONTAINER OF A PORTABLE POWER TOOL
RECIPIENT A POUSSIERE POUR OUTIL MOTORISE MANUEL

(30) Priorität: 29.12.2005 DE 102005062886
(43) Veröffentlichungstag der Anmeldung: 17.09.2008
(73) Patentinhaber: ROBERT BOSCH GMBH, 70442 Stuttgart (DE)
(72) Erfinder: REICH, Doris, 70565 Stuttgart (DE); TIEDE, Steffen, 71083 Herrenberg (DE)
(86) Internationale Anmeldenummer: PCT/EP2006/068472
(87) Internationale Veröffentlichungsnummer: WO 2007/080002

(56) Entgegenhaltungen:
- DE-A1- 19 924 547

## Beschreibung

### Stand der Technik

Die Erfindung geht aus von einem Handwerkzeugmaschinenstaubbehälter nach dem Oberbegriff des Anspruchs 1.

Bei Handwerkzeugmaschinen, wie Schleifern, Bohrmaschinen, Hämmern, Kreissägen, Hobeln und dergleichen, werden Teilchen, Späne oder Staub erzeugt, die sich in das Umfeld der Handwerkzeugmaschine verbreiten. Zur Vermeidung einer solchen Verschmutzung der Umgebung der Handwerkzeugmaschine sind Staubsäcke oder Staubboxen bekannt, die an einem Ausgang eines Gebläses oder eines Absaugsystems anfügbar sind, ein Filterelement aufweisen und Staub und Späne zurückhalten und sammeln. Eine solche Handwerkzeugmaschine mit einer integrierten Staubabsaugung und einer der Staubabsaugung nachgeschalteten staubdichten Staubbox ist beispielsweise aus der DE 199 24 547 A1 bekannt.

### Vorteile der Erfindung

Die Erfindung geht aus von einem Handwerkzeugmaschinenstaubbehälter zur Aufnahme von Bearbeitungsrückständen einer Handwerkzeugmaschine mit einem ein Aufnahmevolumen vorgebenden Behälter.

Es wird vorgeschlagen, dass der Behälter ein Variationsmittel aufweist, das zur Variation der Größe des Aufnahmevolumens vorgesehen ist. Der Handwerkzeugmaschinenstaubbehälter kann klein gemacht werden, beispielsweise für den Transport oder die Lagerung oder für Feinarbeiten für wenig Staubaufkommen. Bei großen Staubmengen kann das Aufnahmevolumen an die Staubmenge angepasst werden, so dass der Behälter nicht zu häufig entleert werden muss. Die Bearbeitungsrückstande können Staub, Späne, Partikel von einem Schleifmittel oder dergleichen sein. Das Variationsmittel ist zweckmäßigerweise so ausgeführt, dass die Variation manuell durch einen Bediener erfolgt. Vorteilhafterweise ist eine Steifigkeit des Behälters so gewählt, dass der Behälter nach einer Variation der Größe des Aufnahmevolumens selbständig in der ihm innewohnenden Form verbleibt. Hierdurch kann ein selbständiges, unerwünschtes Vergrößern oder Verkleinern des Behälters vermieden werden.

In einer vorteilhaften Ausgestaltung der Erfindung weist das Variationsmittel zumindest zwei stabile, durch jeweils unterschiedliche Aufnahmevolumen gekennzeichnete Formzustände auf, zwischen denen es durch Aufbringen einer Mindestkraft reversibel transferierbar ist. Auf diese Weise kann das Aufnahmevolumen an eine entsprechende Arbeit angepasst werden, wobei der Behälter in der ihm gegebenen Form selbständig verbleibt. Das Variationsmittel ist so ausgeführt, dass es schadlos vielfach reversibel zwischen den Formzuständen transferierbar ist. Die Formzustände können diskrete oder kontinuierlich variierbare Formzustände sein. Zweckmäßigerweise ist das Aufnahmevolumen in zumindest drei diskrete Formzustände bringbar. Die Stabilität kann so verstanden werden, dass das Variationsmittel bei einem Aufbringen einer Kraft unterhalb der Mindestkraft zumindest im Wesentlichen unvariiert verbleibt. Die Mindestkraft liegt zweckmäßigerweise zwischen 2 N und 100 N, vorzugsweise zwischen 5 N und 20 N, insbesondere bei etwa 10 N.

Besonders einfach, preiswert und stabil können mehrere diskrete Formzustände erreicht werden, wenn das Variationsmittel ein zur Verformung vorgesehenes Faltenelement aufweist. Das Faltenelement kann eine Faltenstruktur mit mindestens einer Falte aufweisen, die durch eine eine vorbestimmte Mindestkraft übersteigende Kraft ausklappbar oder einklappbar ist, und ist beispielsweise ein Faltenbalg.

In einer weiteren Ausführungsform weist der Behälter einen ersten und einen zweiten zumindest im Wesentlichen starren Bereich auf, wobei der zweite Bereich durch eine Variation des Variationsmittels relativ zum ersten Bereich verlagerbar ist. Es kann das bewegliche Variationsmittel zwischen den beiden stabilen starren Bereichen angeordnet werden und ein stabiler Behälter kann erreicht werden. Der zweite Bereich ist zweckmäßigerweise in Richtung zum ersten Bereich und von diesem weg verlagerbar.

Eine preiswerte Herstellung und einfache Handhabbarkeit des Behälters durch einen Bediener können erreicht werden, wenn der Behälter mit dem Variationsmittel einstückig gefertigt ist.

Außerdem wird vorgeschlagen, dass der Handwerkzeugmaschinenstaubbehälter einen Filter und ein Verbindungsmittel zur Handwerkzeugmaschine aufweist, wobei das Variationsmittel zu einer Variation des Aufnahmevolumens in einen Variationsbereich und in eine Variationsrichtung bei starrer Anordnung des Filters und des Verbindungsmittels zueinander vorgesehen ist. Auf diese Weise kann ein Luftstrom vom Verbindungsmittel zum Filter unabhängig von der momentanen Größe des variierbaren Aufnahmevolumens gehalten werden, so dass eine gute Filterwirkung unabhängig von der Position des Variationsmittels erzielbar ist.

Es wird außerdem vorgeschlagen, dass das Verbindungsmittel einen Einblasbereich festlegt und der Variationsbereich in Bezug auf den Einblasbereich gegenüber dem Filter angeordnet ist. Es kann hierdurch eine gute Abscheidung von Staub aus dem Luftstrom zwischen dem Verbindungsmittel und dem Filter erreicht werden.

Mit gleichem Vorteil ist die Variationsrichtung quer zu einer Einblasrichtung, die durch das Verbindungsmittel festgelegt ist. Alternativ oder zusätzlich kann es - je nach Handwerkzeugmaschine - vorteilhaft sein, die Variationsrichtung in Einblasrichtung zu legen, beispielsweise wenn ein länglicher Bauraum für den Handwerkzeugmaschinenstaubbehälter zur Verfügung steht. In einer weiteren Möglichkeit können zwei Variationsmittel vorgesehen sein, die eine Variation der Größe des Aufnahmevolumens in zwei Richtungen erlauben. Ein Bediener kann - wiederum je nach Handwerkzeugmaschine, mit der er den Staubbehälter verwendet - entscheiden, in welche Richtung der Bereich vergrößert werden soll, ohne dass dieser ihn bei der Arbeit stört.

Eine einfache Variation der Größe des Aufnahmevolumens durch einen Bediener kann erreicht werden, wenn der Behälter ein Griffelement zur Aufbringung einer Kraft auf das Variationsmittel aufweist. Der Griff ist zweckmäßigerweise von außen und im an die Handwerkzeugmaschine angebauten Zustand zugänglich, so dass ein Bediener das Griffelement anfasst und vorteilhafterweise durch Ziehen oder Drücken das Aufnahmevolumen verkleinern oder vergrößern kann.

Die Erfindung ist außerdem gerichtet auf eine Handwerkzeugmaschine mit einem wie oben beschriebenen Handwerkzeugmaschinenstaübbehälter. Üblicherweise werden Schleifstaub oder Späne durch ein Gebläse der Handwerkzeugmaschine in den Handwerkzeugmaschinenstaubbehälter eingeblasen oder eingesogen. Hierdurch entsteht im Betrieb ein Differenzdruck in Form eines Über- oder Unterdrucks im Behälter. Um eine unerwünschte Vergrößerung oder Verkleinerung des Aufnahmevolumens während eines Betriebs der Handwerkzeugmaschine zu vermeiden, ist es vorteilhaft, wenn der Behälter bei einem Wechsel seines Innendrucks von einem Umgebungsdruck zu dem Differenzdruck formstabil bleibt.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Bandschleifer mit einem Staubbehälter,
- Fig. 2: den von der Handwerkzeugmaschine losgelösten Staubbehälter,
- Fig. 3: den Staubbehälter in einem ausgeklappten Zu- stand mit großem Aufnahmevolumen in einer Schnittdarstellung und
- Fig. 4: den Staubbehälter in einer eingeklappten Stel- lung.

### Beschreibung des Ausführungsbeispiels

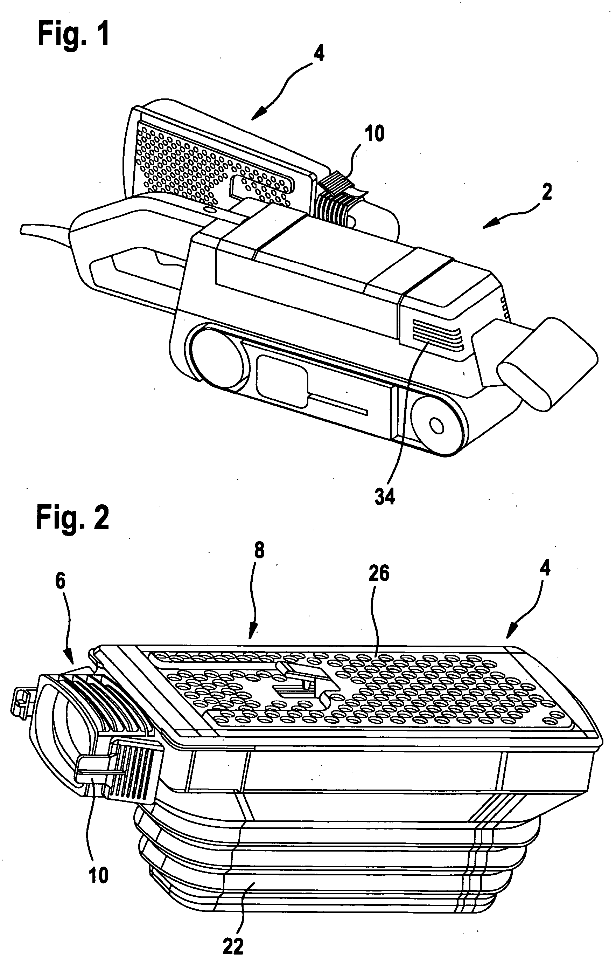

Figur 1 zeigt eine Handwerkzeugmaschine 2 in Form eines Bandschleifers mit einem dazugehörigen Staubbehälter 4 bzw. einem Handwerkzeugmaschinenstaubbehälter. Der Staubbehälter 4, der in Figur 2 in einer perspektivischen Ansicht ohne die Handwerkzeugmaschine 2 dargestellt ist, weist ein Verbindungsmittel 6 und einen daran angeformten Behälter 8 auf, der zur Aufnahme von Staub und Spänen aus der Handwerkzeugmaschine 2 vorgesehen ist.

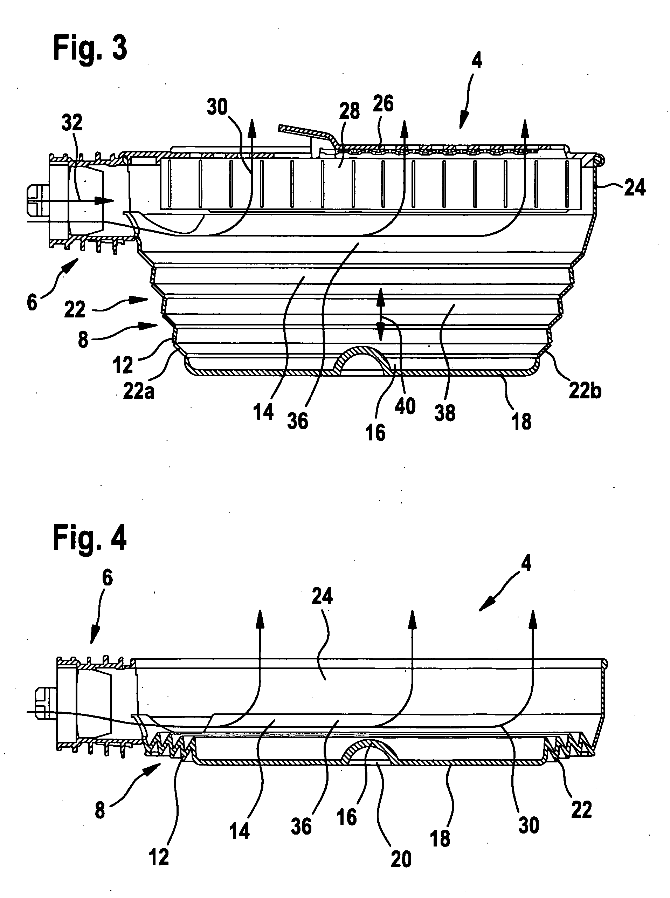

Die Figuren 3 und 4 zeigen den Staubbehälter 4 in einer Schnittdarstellung, Figur 3 mit einem großen Aufnahmevolumen und Figur 4 mit einem kleinen Aufnahmevolumen.

Das Verbindungsmittel 6 ist einstückig an den Behälter 8 angeformt und weist zwei Rasthaken 10 auf zum Hintergreifen von entsprechenden Ausformungen der Handwerkzeugmaschine 2, wodurch das Verbindungsmittel 6 für einen festen Sitz des Staubbehälters 4 an der Handwerkzeugmaschine 2 sorgt. Der Behälter 8 weist ein Variationsmittel 12 in Form eines Faltenelements auf, durch das ein Aufnahmevolumen 14 des Behälters 8 durch einen Bediener variiert werden kann. Mit Hilfe eines Griffelements 16, das an einen starren unteren Bereich 18 des Behälters 8 angeformt ist, kann ein Bediener das Faltenelement auf- und zuklappen und so das Aufnahmevolumen 14, wie in den Figuren 3 und 4 beispielhaft gezeigt ist, variieren. Hierfür weist das Griffelement 16 eine Ausnehmung auf, durch die ein Bediener eine Ausformung 20 des Griffelements 16 hintergreifen und den starren Bereich 18 nach unten ziehen kann.

An den unteren starren Bereich 18 sind aus einem elastischen Kunststoff ausgeführte Faltenglieder 22 ähnlich einer Ziehharmonika angespritzt. Falten der Faltenglieder 22 haben eine Wandstärke von ca. 1 mm bis 3 mm und sind an den Kanten, die eine Gelenkfunktion übernehmen, auf ca. 0,5 mm bis 1 mm ausgedünnt, um eine Faltung zu ermöglichen. Die vier Faltenglieder 22 haben jeweils einen vorderen Abschnitt 22a und einen hinteren Abschnitt 22b, die jeweils unabhängig voneinander aus- oder eingefaltet werden können. Auf diese Weise stehen dem Bediener neben dem in Figur 4 gezeigten ganz eingeklappten Zustand und dem in Figur 3 gezeigten ganz ausgeklappten Zustand drei weitere symmetrische, diskrete Zwischenzustände zur Verfügung, in denen das Faltenelement vorn und hinten gleichmäßig ein- bzw. ausgefaltet ist. 2 x 4 weitere asymmetrische Zustände stehen dem Bediener zur Verfügung, wenn er jeweils nur vordere Abschnitte 22a oder hintere Abschnitte 22b aus- bzw. einfaltet. Auf diese Weise kann der Bediener zwischen einem symmetrisch ausgefalteten Variationsmittel 12 oder einem vorn flachen und hinten tiefen Variationsmittel 12, oder andersherum, auswählen und die Form des Staubbehälters 4 auf diese Weise an seinen jeweiligen Einsatz anpassen. Da der Staubbehälter 4 an eine Vielzahl von verschiedenen Handwerkzeugmaschinen anschließbar ist, die in den Figuren der Übersichtlichkeit halber nicht dargestellt sind, ist es sehr vorteilhaft, die Form des Staubbehälters 4 durch ein entsprechendes Aus- oder Einfalten des Faltenelements an jeweilige Arbeitsbedürfnisse anpassen zu können.

Gegenüber dem unteren starren Bereich 18 weist der Behälter 8 einen oberen starren Bereich 24 auf, an dem eine Filtereinheit 26 mit einem Filter 28 aus Papier eingesetzt ist. Der Filter 28 und das Verbindungsmittel 6 sind durch die jeweilige Verbindung mit dem starren Bereich 24 unabhängig von dem Ausfaltungszustand des Faltenelements stets starr zueinander angeordnet. Auf diese Weise bleibt ein Luftstrom 30 unabhängig von dem Ausfaltungsgrads des Faltenelements immer gleich, wie in den Figuren 3 und 4 angedeutet ist (auch wenn in Figur 4 die Filtereinheit 26 zum besseren Verständnis nicht dargestellt ist).

Das Verbindungsmittel 6 legt hierbei eine Einblasrichtung 32 fest, in der der Luftstrom 30, angetrieben durch ein Gebläse 34 der Handwerkzeugmaschine 2, das Verbindungsmittel 6 durchtritt und in einen Einblasbereich 36, der vom schnellen Luftstrom 30 durchströmt ist, eintritt. Durch eine Veränderung des Aufnahmevolumens 14 wird durch das Variationsmittel 12 ein Variationsbereich 38 festgelegt, um den das Aufnahmevolumen 14 variierbar ist. Dieser Variationsbereich 38 ist relativ zum Einblasbereich 36 gegenüber dem Filter 28 angeordnet, so dass der Luftstrom 30 den Variationsbereich 38 auf seinem Weg zum Filter 28 im Wesentlichen unbeeinflusst lässt und sich der Staub im Variationsbereich 38 absetzen kann. Außerdem ist die Einblasrichtung 32 quer zu einer Variationsrichtung 40 ausgerichtet, in die das Variationsmittel 12 ein- bzw. ausklappbar ist. Auch auf diese Weise wird eine Beeinflussung von im Variationsbereich 38 abgesetztem Staub durch eine unterschiedliche Anordnung des Faltenelements gering gehalten.

Durch den mit Hilfe des Gebläses 34 in den Behälter 8 eingedrückten Luftstrom 30 entsteht innerhalb des Behälters 8 während des Betriebs der Handwerkzeugmaschine 2 ein Überdruck relativ zur Umgebung des Behälters 8. Um zu vermeiden, dass sich das Variationsmittel 12 bei diesem Betriebsüberdruck von allein ausfaltet, sind die Faltenglieder 22 so ausgeführt, dass sie erst ab einer auf sie einwirkenden Mindestkraft von etwa 10 N durch den Bediener ein- bzw. ausklappen. Durch den Überdruck im Behälter 8 wird eine Kraft auf die Faltenglieder 22 ausgeübt, die deutlich geringer ist als 10 N. Außerdem ist diese Mindestkraft so gewählt, dass sie das Eigengewicht des Staubbehälters 4 überschreitet, die Faltenglieder 22 also nicht von alleine einklappen, wenn der Staubbehälter 4 beispielsweise im ausgeklappten Zustand auf den unteren Bereich 18 aufgestellt wird.

In einer alternativen Ausgestaltung ist es auch denkbar, ein Variationsmittel, beispielsweise in Form eines Faltelements, an dem dem Verbindungsmittel 6 gegenüberliegenden hinteren Bereich des oberen Bereichs 24 anzuordnen, um eine Variation des Aufnahmevolumens nach hinten zu ermöglichen, beispielsweise weil dort mehr Platz zur Verfügung steht. Außerdem ist es denkbar, an einen oder beiden Seitenwänden ein entsprechendes Variationsmittel anzubringen. Auch eine Anordnung eines Variationsmittels an der Filtereinheit 26, durch die die Filtereinheit 26 relativ zum Verbindungsmittel 6 angehoben oder abgesenkt werden kann, ist vorteilhaft.

## Patentansprüche

1. Handwerkzeugmaschinenstaubbehälter zur Aufnahme von Bearbeitungsrückständen einer Handwerkzeugmaschine (2) mit einem ein Aufnahmevolumen (14) vorgebenden Behälter (8), **dadurch gekennzeichnet, dass** der Behälter (8) ein Variationsmittel (12) aufweist, das zur Variation der Größe des Aufnahmevolumens (14) vorgesehen ist.

2. Handwerkzeugmaschinenstaubbehälter nach Anspruch 1, **dadurch gekennzeichnet, dass** das Variationsmittel (12) zumindest zwei stabile, durch jeweils unterschiedliche Aufnahmevolumen (14) **gekennzeichnet**e Formzustände aufweist, zwischen denen es durch Aufbringen einer Mindestkraft reversibel transferierbar ist.

3. Handwerkzeugmaschinenstaubbehälter nach Anspruch 1 oder 2, **dadurch gekennzeichnet, dass** das Variationsmittel (12) ein zur Verformung vorgesehenes Faltenelement aufweist.

4. Handwerkzeugmaschinenstaubbehälter nach einem der vorhergehenden Ansprüche, **dadurch gekennzeichnet, dass** der Behälter (8) einen ersten und einen zweiten zumindest im Wesentlichen starren Bereich (18, 24) aufweist, wobei der zweite Bereich (18, 24) durch eine Variation des Variationsmittels (12) relativ zum ersten Bereich (18, 24) verlagerbar ist.

5. Handwerkzeugmaschinenstaubbehälter nach einem der vorhergehenden Ansprüche, **dadurch gekennzeichnet, dass** der Behälter (8) mit dem Variationsmittel (12) einstückig gefertigt ist.

6. Handwerkzeugmaschinenstaubbehälter nach einem der vorhergehenden Ansprüche, **gekennzeichnet durch** einen Filter (28) und ein Verbindungsmittel (6) zur Handwerkzeugmaschine (2), wobei das Variationsmittel (12) zu einer Variation des Aufnahmevolumens (14) in einen Variationsbereich (38) und in eine Variationsrichtung (40) bei starrer Anordnung des Filters (28) und des Verbindungsmittels (6) zueinander vorgesehen ist.

7. Handwerkzeugmaschinenstaubbehälter nach Anspruch 6, **dadurch gekennzeichnet, dass** das Verbindungsmittel (6) einen Einblasbereich (36) festlegt und der Variationsbereich (38) in Bezug auf den Einblasbereich (36) gegenüber dem Filter (28) angeordnet ist.

8. Handwerkzeugmaschinenstaubbehälter nach Anspruch 6 oder 7, **dadurch gekennzeichnet, dass** das Verbindungsmittel (6) eine Einblasrichtung (32) festlegt und die Variationsrichtung (40) quer zur Einblasrichtung (32) ist.

9. Handwerkzeugmaschinenstaubbehälter nach einem der vorhergehenden Ansprüche, **dadurch gekennzeichnet, dass** der Behälter (8) ein Griffelement (16) zur Aufbringung einer Kraft auf das Variationsmittel (12) aufweist.

10. Handwerkzeugmaschine (2) mit einem Handwerkzeugmaschinenstaubbehälter nach einem der vorhergehenden Ansprüche.

11. Handwerkzeugmaschine (2) nach Anspruch 10, **gekennzeichnet durch** ein Gebläse (34) zur Erzeugung eines Differenzdrucks im Behälter (8), wobei der Behälter (8) bei einem Wechsel seines Innendrucks von einem Umgebungsdruck zum Differenzdruck formstabil bleibt.

## Claims

1. Dust container of a portable power tool for receiving processing residues of a portable power tool (2), having a container (8) predetermining a receiving volume (14), **characterized in that** the container (8) has a variation means (12) which is provided for varying the size of the receiving volume (14).

2. Dust container of a portable power tool according to Claim 1, **characterized in that** the variation means (12) has at least two stable physical states which are **characterized by** different respective receiving volumes (14) and between which said variation means (12) can be transferred reversibly by applying a minimum force.

3. Dust container of a portable power tool according to Claim 1 or 2, **characterized in that** the variation means (12) has a folding element provided for deformation.

4. Dust container of a portable power tool according to one of the preceding claims, **characterized in that** the container (8) has a first and a second at least essentially rigid region (18, 24), the second region (18, 24) being displaceable relative to the first region (18, 24) by varying the variation means (12).

5. Dust container of a portable power tool according to one of the preceding claims, **characterized in that** the container (8) is produced in one piece with the variation means (12).

6. Dust container of a portable power tool according to one of the preceding claims, **characterized by** a filter (28) and a connecting means (6) for the portable power tool (2), the variation means (12) being provided for varying the receiving volume (14) in a variation region (38) and in a varying direction (40) when the filter (28) and the connecting means (6) are arranged rigidly relative to one another.

7. Dust container of a portable power tool according to Claim 6, **characterized in that** the connecting means (6) establishes a blow-in region (36), and the variation region (38), with respect to the blow-in region (36), is arranged opposite the filter (28).

8. Dust container of a portable power tool according to Claim 6 or 7, **characterized in that** the connecting means (6) establishes a blow-in direction (32), and the variation direction (40) is transverse to the blow-in direction (32).

9. Dust container of a portable power tool according to one of the preceding claims, **characterized in that** the container (8) has a grip element (16) for applying a force to the variation means (12).

10. Portable power tool (2) having a dust container of a portable power tool according to one of the preceding claims.

11. Portable power tool (2) according to Claim 10, **characterized by** a fan (34) for producing a differential pressure in the container (8), the container (8) remaining dimensionally stable when its internal pressure changes from an ambient pressure to the differential pressure.

## Revendications

1. Récipient à poussière pour machine-outil manuelle, pour recevoir des résidus d'usinage d'une machine-outil manuelle (2), comprenant un récipient (8) prédéfinissant un volume de réception (14), **caractérisé en ce que** le récipient (8) présente un moyen de variation (12) qui est prévu pour faire varier la taille du volume de réception (14).

2. Récipient à poussière pour machine-outil manuelle selon la revendication 1, **caractérisé en ce que** le moyen de variation (12) présente au moins deux états de forme stables **caractérisés par** des volumes de réception différents (14), entre lesquels il peut être transféré de manière réversible par l'application d'une force minimale.

3. Récipient à poussière pour machine-outil manuelle selon la revendication 1 ou 2, **caractérisé en ce que** le moyen de variation (12) présente un élément de pli prévu pour la déformation.

4. Récipient à poussière pour machine-outil manuelle selon l'une quelconque des revendications précédentes, **caractérisé en ce que** le récipient (8) présente une première et une deuxième région au moins essentiellement rigides (18, 24), la deuxième région (18, 24) peut être déplacée par rapport à la première région (18, 24) par une variation du moyen de variation (2).

5. Récipient à poussière pour machine-outil manuelle selon l'une quelconque des revendications précédentes, **caractérisé en ce que** le récipient (8) est fabriqué d'une seule pièce avec le moyen de variation (12).

6. Récipient à poussière pour machine-outil manuelle selon l'une quelconque des revendications précédentes, **caractérisé par** un filtre (28) et un moyen de connexion (6) à la machine-outil manuelle (2), le moyen de variation (12) étant prévu pour une variation du volume de réception (14) dans une région de variation (38) et pour une direction de variation (40) dans le cas d'un agencement rigide du filtre (28) et du moyen de connexion (6) l'un par rapport à l'autre.

7. Récipient à poussière pour machine-outil manuelle selon la revendication 6, **caractérisé en ce que** le moyen de connexion (6) fixe une région de soufflage (36) et la région de variation (38) est disposée par rapport à la région de soufflage (36) en face du filtre (28).

8. Récipient à poussière pour machine-outil manuelle selon la revendication 6 ou 7, **caractérisé en ce que** le moyen de connexion (6) fixe une direction de soufflage (32) et la direction de variation (40) est transversale à la direction de soufflage (32).

9. Récipient à poussière pour machine-outil manuelle selon l'une quelconque des revendications précédentes, **caractérisé en ce que** le récipient (8) est un élément de préhension (16) pour l'application d'une force sur le moyen de variation (12).

10. Machine-outil manuelle (2) comprenant un récipient à poussière pour machine-outil manuelle selon l'une quelconque des revendications précédentes.

11. Machine-outil manuelle (2) selon la revendication 10, **caractérisée par** une soufflante (34) pour produire une différence de pression dans le récipient (8), le récipient (8) conserve une forme stable en cas de changement de sa pression interne d'une pression environnante à la pression différentielle.
